(19) Europäisches Patentamt
European Patent Office
Office européen des brevets

(11) Veröffentlichungsnummer: **0 275 906**
**A2**

(12) **EUROPÄISCHE PATENTANMELDUNG**

(21) Anmeldenummer: **88100368.5**

(22) Anmeldetag: **13.01.88**

(51) Int. Cl.⁴: **C08L 67/06**, C08L 67/02, C08L 69/00, C08F 283/01

(30) Priorität: **22.01.87 DE 3701740**

(43) Veröffentlichungstag der Anmeldung: **27.07.88 Patentblatt 88/30**

(84) Benannte Vertragsstaaten: **AT DE ES FR GB IT**

(71) Anmelder: **BAYER AG**

**D-5090 Leverkusen(DE)**

(72) Erfinder: **Meier, Helmut-Martin, Dr.**
**Am Obersthof 3**
**D-4030 Ratingen 6(DE)**
Erfinder: **Pielartzik, Harald, Dr.**
**Doerperhofstrasse 39**
**D-4150 Krefeld(DE)**
Erfinder: **Brinkmeyer, Hermann, Dr.**
**Bodelschwinghstrasse 12**
**D-4150 Krefeld(DE)**

(54) **Thermotrope Polymere enthaltende ungesättigte Polyesterharze, Verfahren zu ihrer Herstellung und ihre Verwendung zur Herstellung von Formkörpern.**

(57) Ungesättigte Polyesterharze, die einen Zusatz von thermotropem Polymer enthalten, können bei gegebener Viskosität des ungesättigten Polyesters mit einer geringeren Menge an copolymerisierbarem Monomer gehärtet werden.

EP 0 275 906 A2

## Thermotrope Polymere enthaltende ungesättigte Polyesterharze, Verfahren zu ihrer Herstellung und ihre Verwendung zur Herstellung von Formkörpern

Die Erfindung betrifft Mischungen aus ungesättigten Polyesterharzen und thermotropen Polymeren, ein Verfahren zu ihrer Herstellung und ihre Verwendung zur Herstellung von Formkörpern. Die erfindungsgemäßen Mischungen eignen sich hervorragend als Gießharze und als Harzkomponente von Preßmassen und Spachtelmassen.

Ungesättigte Polyesterharze, d.h. Mischungen $\alpha$, $\beta$-ethylenisch ungesättigter Polyesterharze und damit copolymerisierbarer Monomerer, sind als wertvolle Harzgrundlage von Konstruktionswerkstoffen (Formmassen) und Beschichtungen (Überzugsmittel) weit verbreitet. Das in der Praxis gebräuchlichste copolymerisierbare Monomer ist Styrol. Zwar wird es bei der Härtung in das polymere Netzwerk eingebaut, aber vor der Härtung besteht die Gefahr, daß es aufgrund seines hohen Dampfdrucks in die Atmosphäre gelangt und wegen seiner Toxizität schadet. Eine Reduzierung des Gehalts copolymerisierbarer Monomerer wäre deshalb wünschenswert.

Überraschenderweise wurde gefunden, daß es bei gegebener Viskosität des ungesättigten Polyesters durch Zusatz von thermotropem Polymer gelingt, mit einer beträchtlich geringeren Menge an copolymerisierbarem Monomer auszukommen.

Gegenstand der Erfindung sind also Mischungen aus

I) 10 bis 90, vorzugsweise 30 bis 70 Gew.-% ungesättigtem Polyesterharz und

II) 90 bis 10, vorzugsweise 70 bis 30 Gew.-% thermotropem Polymer, wobei sich die Prozentangaben jeweils auf die Summe I + II beziehen.

Ungesättigte Polyesterharze I) im Sinne der Erfindung bestehen aus

A) 30 bis 95, vorzugsweise 50 bis 90, Gew.-Teilen ungesättigtem Polyester und

B) 70 bis 5, vorzugsweise 40 bis 10, Gew.-Teilen mit A) copolymerisierbarem Monomer.

Bevorzugte $\alpha,\beta$-ungesättigte Polyester A sind die üblichen Polykondensationsprodukte mindestens einer $\alpha,\beta$-ethylenisch ungesättigten Dicarbonsäure mit in der Regel 4 oder 5 C-Atomen oder deren esterbildenden Derivate, z.B. ihren Anhydriden, gegebenenfalls in Abmischung mit bis zu 200 Mol-%, bezogen auf die ungesättigten Säurekomponenten, mindestens einer aliphatischen Dicarbonsäure mit 4 bis 10 C-Atomen oder einer gesättigten oder ungesättigten cycloaliphatischen, araliphatischen oder aromatischen Dicarbonsäure mit 8 bis 10 C-Atomen oder deren esterbildenden Derivate mit mindestens einer Polyhydroxyverbindung, insbesondere Dihydroxyverbindung mit 2 bis 8 C-Atomen - also Polyester, wie sie bei J. Björksten et al., "Polyesters and their Applications", Reinhold Publishing Corp., New York 1956, beschrieben sind.

Beispiele für bevorzugt zu verwendende ungesättigte Dicarbonsäuren oder ihre Derivate sind Maleinsäure oder Maleinsäureanhydrid und Fumarsäure. Verwendet werden können z.B. jedoch auch Mesaconsäure, Citraconsäure, Itaconsäure oder Chlormaleinsäure. Beispiele für die gegebenenfalls zu verwendenden aliphatischen, gesättigten oder ungesättigten cyclo-aliphatischen, araliphatischen oder aromatischen Dicarbonsäuren oder für ihre Derivate sind Phthalsäure und Phthalsäureanhydrid, Isophthalsäure, Terephthalsäure, Hexa-und Tetrahydrophthalsäure bzw. deren Anhydride, Endomethylentetrahydrophthalsäuren und deren Anhydrid, Bernsteinsäure bzw. Bernsteinsäureanhydrid und Bernsteinsäureester und -chloride, Adipinsäure, Sebacinsäure. Um schwerentflammbare Harze herzustellen, können z. B. Hexachlorendomethylen-tetrahydrophthalsäure, Tetrachlorphthalsäure oder Tetrabromphthalsäure verwendet werden. Als zweiwertige Alkohole können Ethylenglykol, Propandiol-1,2, Propan diol-1,3, Diethylenglykol, Dipropylenglykol, Butandiol-1,3, Butandiol-1,4, Neopentylglykol, Hexandiol-1,6, 2,2-Bis-(4-hydroxycyclohexyl)-propany, bis-oxalkyliertes Bisphenol A, Perhydrobisphenol und andere eingesetzt werden. Bevorzugt verwendet werden Ethylenglykol, Propandiol-1,2, Diethylenglykol und Dipropylenglykol.

Weitere Modifikationen sind möglich durch Einsatz ein-, drei-oder vierwertiger Alkohole mit 1 bis 6 C-Atomen wie Methanol, Ethanol, Butanol, Allylalkohol, Benzylalkohol, Cyclohexanol und Tetrahydrofurfurylalkohol, Trimethylolpropan, Glycerin und Pentaerythrit, von Mono-, Di-und Triallylethern und Benzylethern drei-und mehrwertiger Alkohole mit 3 bis 6 C-Atomen gemäß DE-AS 1 024 654, z.B. Trimethylolpropandiallylether, sowie durch Einbau einbasischer Säuren wie Benzoesäure oder Acrylsäure.

Die ungesättigten Polyester A können auch Umsetzungsprodukte von Polyesterpräkondensaten und Dienen, z.B. Dicyclopentadien, nach Diels-Alder sein. Solche Polyester sind z.B. bei I.R. Lawrence "Polyester Resins", Reinhold Publ. Corp., New York 1960, S. 18 f. und im Kunststoff-Handbuch Bd. VIII ("Polyester"), Carl Hanser Verlag, München 1973, S. 247-312, beschrieben.

Die Säurezahlen der Polyester A liegen gewöhnlich zwischen 10 und 100, vorzugsweise zwischen 20 und 70, die OH-Zahlen zwischen 10 und 150, vorzugsweise zwischen 20 und 100, und die als Zahlenmittel

bestimmten Molekulargewichte $\overline{M}_n$ zwischen ca. 500 und 5000, vorzugsweise zwischen ca. 1000 und 3000 (dampfdruckosmometrisch gemessen in Dioxan und Aceton; bei differierenden Werten wird der niedrigere als der korrekte angesehen).

Als mit den ungesättigten Polyestern A copolymerisierbare ungesättigte Monomere B eignen sich in der Polyestertechnologie gebräuchliche ungesättigte Verbindungen, die bevorzugt α-substituierte Vinyl-oder Vinylidengruppen oder β-substituierte Allylgruppen tragen, bevorzugt Styrol; aber auch beispielsweise kernchlorierte und -alkylierte bzw. -alkenylierte Styrole, wobei die Alkylgruppen 1 bis 4 Kohlenstoffatome enthlaten, können, z.B. Vinyltoluol, Divinylbenzol, α-Methylstyrol, tert.-Butylstyrol, Chlorstyrole; Vinylester von Carbonsäuren mit 2 bis 6 Kohlenstoffatomen, bevorzugt Vinylacetat, Vinylpropionat, Vinylbenzoat, Vinylpyridin, Vinylnaphthalin, Vinylcyclohexan, Acrylsäure und Methacrylsäure und/oder ihre Ester (vorzugsweise Vinyl-, Allyl-und Methallylester) mit 1 bis 4 Kohlenstoffatomen in der Alkoholkomponente, ihre Amide und Nitrile, Maleinsäureanhydrid, -halb-und -diester mit 1 bis 4 Kohlenstoffatomen in der Alkoholkomponente, -halb-und -diamide oder cyclische Imide wie Butylacrylat, Methylmethacrylat, Acrylnitril, N-Methylmaleinimid oder N-Cyclohexylmaleinimid; Allyverbindungen wie Allylbenzol und Allylester wie Allylacetat, Phthalsäurediallylester, Isophthalsäurediallylester, Fumarsäurediallylester, Allylcarbonate, Diallylcarbonate, Triallylphosphat und Triallylcyanurat.

Als "thermotrop" bezeichnet man solche Substanzen, die flüssig-kristalline Schmelzen bilden. Thermotrope Polymere sind hinreichend bekannt, vgl. z.B. F.E. Mc Farlane et al., Liquid Crystal Polymers II, Contemporary Topics in Polymer Science, Vol. 2, Plenum Publishing Corporation, 1977;

W. J. Jackson und H. F. Kuhfuss, J. Polymer Science Polymer Chem. Ed. 14, 2042 (1976);

W. C. Wooten et al. in A. Ciferri "Ultra-high Modulus Polymers", Applied Science Publ., London 1979, S. 362 f.;

A. Blumstein et al., "Liquid Crystalline Order in Polymers", Academic Press 1978;

J. Preston, Angew. Makromol. Chem. 109/110, S. 1-19 (1982);

A. Ciferri, W. R. Krigbaum, R. B. Meyer "Polymer Liquid Crystals", Academic Press, New York, 1982;

P. J. Flory, I. Uematsu, S. P. Papkov, CH. Ober und R. W. Lenz, Advances in Polymer Science 59 (1984);

B. Wunderlich, J. Grebowicz, M. G. Dobb, J. Mc Intyre, H. Finkelmann, G. Rehage, V. P. Shibaev und N. Plate, Advances in Polymer Science 60/61 (1984);

EP 1185, 1340, 8855, 11 640, 15 856, 17 310, 18 145, 18 709. 22 344, 44 205, 49 615;

US 3 991 013, 3 991 014, 4 066 620, 4 067 852, 4 083 829, 4 107 143;

US-PS 3 991 013, 3 991 014, 4 066 620, 4 067 852, 4 083 829, 4 107 143;

WO 79/797, 79/1034, 79/1040.

Der flüssig-kristalline Zustand von Polymerschmelzen läßt sich mit Hilfe eines Polarisationsmikroskops untersuchen: Für die Untersuchungen war das Okular mit einem Aufsatz ausgerüstet, der eine Fotodiode im Brennpunkt der Okularlinse angeordnet enthielt. Anhand eines nachgeschalteten Meßverstärkers mit Regeleinrichtung wurde der Meßwert am eingeschalteten Mikroskop bei parallel angeordneten Nicolschen Prismen in Abwesenheit einer Materialprobe auf 100 Skalenteile eingestellt. Bei gekreuzten Nicholschen Prismen ergab sich dann ein Wert von 0,01 Skalenteilen.

Die Schichtdicke der untersuchten Polymerschmelzen betrug 100 µm.

Die Untersuchung der Polymeren erfolgt nach dem Aufschmelzen der Proben bei Temperaturen zwischen 200 und 400° C. Sofern in diesem gesamten Bereich oder in einem Teil davon eine Aufhellung der zwischen den gekreuzten Nicolschen Prismen beobachteten Schmelze auftrat, wurde das Polymere als thermotrop flüssigkristallin eingestuft.

Die flüssig-kristallinen Polymeren zeigen in der Meßanordnung Werte über 1 Skalenteil, meist Werte von 3 bis 90 Skalenteilen. Für amorphe Schmelzen, z.B. aromatische Polycarbonate, wurden dagegen Werte von weniger als 0,1 Skalenteil gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssig-kristalliner Komponenten mittels Röntgenkleinwinkelstreuung in der Schmelze nachzuweisen, wie es z.B. G.W. Gray und P.A. Windsor, "Plastic Crystals, Physico-Chemical Properties and Methods of Investigation", insbesondere Chapter 3, John Wiley & Sons, New York, Sydney, Toronto 1974 beschrieben ist.

Geeignete thermotrope Polymere, die in Form von Fasern oder Pulver zur Verwendung in den erfindungsgemäßen Mischungen geeignet sind, umfassen thermotrope Polyester, Polyestercarbonate, Polyesteramide, Polyesterimide, Polythiolester, Polyazomethine und thermotrope Cellulosederivate wie beispielsweise Hydroxypropylcellulose.

Thermotrope Polykondensate II könnwn z.B. aus den folgenden Verbindungen hergestellt werden:

o-, m-oder p-Hydroxy-benzoesäure,

Hydrochinon,
durch Halogen, $C_1$-bis $C_3$-Alkyl oder Phenyl substituierte Hydrochinone,
Hydroxy-naphthalin-carbonsäuren,
Isophthalsäure,
Terephthalsäure,
Naphthalindicarbonsäure,
4,4'-Dihydroxydiphenyl,
4,4'-Dihydroxy-stilben,
1,2-Bis(p-carboxy-phenoxy)ethan,
4,4'-Dihydroxyphenylether,
4,4'-Diphenylether-dicarbonsäure,
Resorcin,
4,4'-Benzophenondicarbonsäure,
4,4'-Dihydroxy-diphenylsulfid,
4,4'-Dihydroxy-diphenylsulfon,
2.5-Furandicarbonsäure,
4,4'-Bis(p-hydroxy-phenoxy)diphenylether,
1,2-Bis(p-hydroxyphenyl)ethan,
Dihydroxyanthrachinone,
4,4'-Hydroxy-diphenylether-carbonsäure,
Azobenzoldicarbonsäure,
Bisphenol-A,
Ethylenglykol, Hexandiol-1,6, Adipin-, Sebacinsäure,
Kohlensäure.

Nicht sämtliche Kombinationen der oben aufgezählten Ausgangsmaterialien ergeben thermotrope Polykondensate. Der Fachmann wird seine Auswahl jeweils anhand der oben zitierten Literatur treffen oder aber aufgrund seiner Erfahrung empirisch vorgehen. Da die thermotropen Polykondensate II an sich bekannt sind, kann eine längere Ausführung an dieser Stelle entfallen.

Bevorzugte thermotrope Polymere II sind voll-aromatische Polyester und voll-aromatische Polyestercarbonate. Derartige Polyester und Polyestercarbonate sind bekannt;
vgl. DE-OS 33 25 704 = US-PS 45 79 934,
DE-OS 33 25 705 = US-PS 45 64 669,
DE-OS 33 25 703 = US-PS 46 03 190,
DE-OS 33 25 787 = US-PS 45 36 561,
DE-OS 34 15 530 = US-PS 46 00 764,
DE-OS 34 19 794, 34 27 886, 35 02 378, 35 17 270 und 35 17 948.

Der Carbonatgruppengehalt thermotroper Polyestercarbonate II kann bis zu 40 Mol-%, vorzugsweise 25 bis 35 Mol-%, bezogen auf die Summe von Ester-und Carbonatgruppen betragen.

Bevorzugte thermotrope Polyestercarbonate II umfassen solche auf Basis von
a) (gegebenenfalls substituierter) p-Hydroxybenzoesäure,
b) Diphenol,
c) Kohlensäure und gegebenenfalls
d) aromatischer Dicarbonsäure, wobei ein Teil der Diphenolreste (b) als 4,4'-Dihydroxybiphenylreste (e) vorliegt und - abgesehen von den Endgruppen - für die molaren Verhältnisse der Reste folgendes gilt:

$$a + b = 1$$

$$b = c + d,$$

$$\frac{e}{b} = 0{,}1 \text{ bis } 0{,}9, \text{ vorzugsweise } 0{,}11 \text{ bis } 0{,}7, \text{ insbesondere } 0{,}125 \text{ bis } 0{,}4, \text{ und}$$

$$\frac{c}{c + d} = 0{,}6 \text{ bis } 1;$$

a = 0,4 bis 0,8, vorzugsweise 0,6 bis 0,75,

b - e = 0,02 bis 0,53, vorzugsweise 0,06 bis 0,36, insbesondere 0,1 bis 0,35,
c = 0,12 bis 0,6, vorzugsweise 0,175 bis 0,4,
d = 0 bis 0,24, vorzugsweise 0 bis 0/12, und e =0,02 bis 0,53, vorzugsweise 0,0275 bis 0,28, insbesondere 0,03 bis 0,16.

Bevorzugte (a) p-Hydroxybenzoesäuren sind durch $C_1$-$C_4$-Alkyl, $C_1$-$C_4$-Alkoxy, $C_6$-$C_{10}$-Aryl oder -Alkylaryl (wie Phenyl, Tolyl, ·Naphthyl), Halogen (vorzugsweise Chlor und Brom) kernsubstituierte p-Hydroxybenzoesäuren, wie z.B. 4-Hydroxy-2-methylbenzoesäure, 4-Hydroxy-3-methylbenzoesäure, 2-Ethyl-4-hydroxybenzoesäure, 3-Ethyl-4-hydroxybenzoesäure, 2-oder 3-Chlor-4-hydroxybenzoesäure, 4-Hydroxy-2-phenylbenzoesäure oder 4-Hydroxy-3-phenyl-benzoesäure, vorzugsweise jedoch unsubstituierte p-Hydroxybenzoesäure selbst.

Bevorzugte (b) Diphenole sind Verbindungen der Formel

HO - Z-OH (I)

worin Z einen zweiwertigen ein-oder mehrkernigen aromatischen Rest mit 6 bis 30 C-Atomen bedeutetm wobei Z derart gebaut ist, daß die beiden OH-Gruppen direkt an je ein C-Atom eines aromatischen Systems gebunden sind, wie z.B.

(1) Hydrochinon, Methylhydrochinon, Ethylhydrochinon, 1,4-Dihydroxynaphthalin, 1,5-Dihydroxynaphthalin, 2,6-Dihydroxynaphthalin, die zu keiner wesentlichen Winkelung der Polykondensatkette führen, und

(2) Verbindungen, die zu einer wesentlichen Winkelung der Polykondensatkette beitragen wie z.B. Resorcin, 1,6-Dihydroxynaphthalin, 2,5-Dihydroxynaphthalin, 2,7-Dihydroxynaphthalin und Bisphenole der Formel

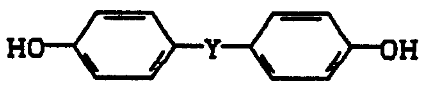

(II)

in der

Y einen Alkylen-oder Alkylidenrest mit 1 bis 7 C-Atomen, einen Cycloalkylen-oder Cycloalkylidenrest mit 5 bis 12 C-Atomen, -O-, -S-, $-\underset{\overset{\|}{O}}{S}-$, $-SO_2$-oder $-\underset{\overset{\|}{O}}{C}-$bedeutet,

sowie deren kernalkylierte und kernhalogenierte Derivate, z.B.
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone und
4,4′ -Bis-(hydroxyphenyl)-diisopropylbenzole

sowie deren kernalkylierte und kernhalogenierte Verbindungen, also z.B.
Bis-(4-hydroxyphenyl)-methan,
1,1-Bis-(4-hydroxyphenyl)-ethan,
Bisphenol A,
1,1-Bis-(4-hydroxyphenyl)-cyclohexan,
Bis-(4-hydroxyphenyl)-sulfon,
4,4′ -Dihydroxydiphenylether und
4,4′ -Dihydroxydiphenylsulfid.

Es empfiehlt sich, die Diphenole derart auszuwählen, daß maximal 30 Mol-%, bezogen auf die Gesamtmenge an Diphenolresten, Diphenolreste der Gruppe (2) sind. Dabei ist ein hoher Anteil an Diphenolresten der Gruppe (2) insbesondere dann vertretbar, wenn er durch zusätzliche lineare Reste, wie z.B. Terephthalsäurereste, "kompensiert" wird.

Bevorzugte Derivate zum Einbau der (c) Carbonatgruppen sind Phosgen, Diarylcarbonate, wie z.B. Diphenylcarbonat, Ditolylcarbonat, Phenyl-tolylcarbonat, Dinaphthylcarbonat, Dialkylcarbonat wie z.B. Diethylcarbonat, Dimethylcarbonat, Dimethyldicarbonat, Diethyldicarbonat, Gykolcarbonat und Chlorameisensäureester.

Bevorzugte (d) aromatische Dicarbonsäuren besitzen 8 bis 24, vorzugsweise 8 bis 14, C-Atome und können pro aromatischen Ring durch bis zu 4 $C_1$-$C_4$-Alkylreste, $C_1$-$C_4$-Alkoxyreste oder Halogenatome (vorzugsweise Chlor und Brom) substituiert s ein, wie z.B. Naphthalin-1,4-dicarbonsäure, Diphenyl-2,2′ -dicarbonsäure, Diphenyl-4,4′ -dicarbonsäure, Diphenylmethan-4,4′ -dicarbonsäure, Diphenylether-4,4′ -dicarbonsäure, Diphenylsulfon-4,4′ -dicarbonsäure, vorzugsweise Terephthalsäure, isophthalsäure und

Naphthalin-2,6-dicarbonsäure sowie deren kernsubstituierte Derivate.

Als Endgruppen können die thermotropen Polyester bzw. Polyestercarbonate II -H, -OH, $-OC_6H_5$ oder von Kettenabbrechern herrührende Reste enthalten.

Die thermotropen Polyester bzw. Polyestercarbonate II können die Reste der Verbindungen (a) bis (e) in statistischer Verteilung oder in Blöcken enthalten.

Die thermotropen Polyester bzw. Polyestercarbonate können nach verschiedenen Verfahren hergestellt werden, z.B. durch Kondensation der Carbonsäurechloride oder durch Veresterung der Carbonsäurearylester mit den phenolischen Verbindungen und anschließenden Polykondensation, wobei die Carbonsäurechloride auch aus den entsprechenden Carbonsäuren und Chlorierungsmitteln in situ erzeugt werden können. Im Falle der Veresterung und anschließender Polykondensation wird so lange Phenol aus der Reaktionsmischung abdestilliert, bis der gewünschte Kondensationsgrad erreicht ist.

Den erfindungsgemäßen Mischungen können auch übliche Zusatzstoffe, wie Füllstoffe, Verstärkungsmittel, Pigmente, Beschleuniger, Aufheller, Thixotropiermittel und Stabilisatoren, wie z.B. Hydrochinon oder dessen Derivate, zugesetzt werden.

Zur Herstellung von Formmassen können den erfindungsgemäßen Mischungen 50 bis 350 Gew.-%, bezogen auf Polyesterharz A + B, Füllstoffe und/oder Verstärkungsmittel, wie Kreide, Talkum, Baryt, Aerosil, Glasfasern, zugesetzt werden. Farbstoffe oder Pigmente können natürlich ebenfalls zugegeben werden. Das Mischen der verschiedenen Komponenten der erfindungsgemäßen Mischungen erfolgt zweckmäßig in Knetern, Dissolvern oder auf Walzenstühlen.

Vor der Härtung können den erfindungsgemäßen Mischungen Polymerisationsinitiatoren, vorzugsweise Diacylperoxide oder Percarbonate, in Mengen von 1 bis 10 Gew.-%, bezogen auf Polyesterharz A + B, zugesetzt werden. Bevorzugte Initiatoren sind z.B. Peroxide und Percarbonate wie Diacetylperoxid, Dibenzoylperoxid, Di-p-chlorbenzoylperoxid, Phthaloylperoxid, Succinylperoxid, Dilaurylperoxid, Acetylcyclohexansulfonylperoxid, Isopropylpercarbonat, Cyclohexylpercarbonat und Bis-(4-tert.-butylcyclohexyl)-percarbonat.

Die erfindungsgemäßen Mischungen bzw. die daraus hergestellten Massen können bei Temperaturen von -15° C bis +120° V, vorzugsweise von 0° C bis 90° C oder - falls sie vorbeschleunigt sind - bei Raumtemperatur gehärtet werden.

Aus den erfindungsgemäßen Mischungen hergestellte Preß-und Gießmassen eignen sich insbesondere zur Herstellung von Formteilen und Spachtelmassen, die in den verschiedensten Gebieten der Bauindustrie, der Elektroindustrie, des Bootsbaus, der medizinischen Technik und der Kraftfahrzeugindustrie eingesetzt werden können.

Beschreibung der Versuche

Herstellung der ungesättigten Polyesterharze:

UP 1:

Aus 3265 g Diethylenglykol, 478 g Ethylenglykol und 3596 g Maleinsäureanhydrid wird in der üblichen Schmelzkondensation unter Addition von 1545 g Dicyclopentadien ein ungesättigter Polyester erhalten, der nach Abmischung mit Styrol folgende Kennzahlen aufweist:
Festgehalt: 62 %
Säurezahl: 12 mg KOH/g
Viskosität: 500 mPa.s

UP 2:

Aus 1458 g Ethylenglykol, 798 g 1,2-Propylenglykol, 3012 g Trimethylolpropan-diallylether, 3102 g Maleinsäureanhydrid, 521 g Phthalsäureanhydrid, 55 g Methanol und 550 g eines Esters aus Maleinsäure und Trimethylolpropan-diallylether erhält man in der üblichen Schmelzkondensation einen ungesättigten Polyester, der in Styrol gelöst wird.
Festgehalt: 75 %
Säurezahl: 20 mg KOH/g
Visosität: 2600 mPa.s

UP 3:

Aus 3028 g 1,2-Propylenglykol, 1620, Dipropylenglykol, 3838 g Maleinsäureanhydrid und 1175 g Phthalsäureanhydrid wird durch übliche Schmelzkondensation ein ungesät tigter Polyester hergestellt, der, mit Styrol gemischt, folgende Kennzahlen besitzt:

Festgehalt: 75 %
Säurezahl: 19 mg KOH/g
Viskosität: 1600 mPa.s

UP 4:

Fahrweise wie UP 2, aber mit anderen Kennzahlen:

Festgehalt: 85 %
Säurezahl: 20 mg KOH/g
Viskosität: 14 000 mPa.s

Herstellung des thermotropen Polyesters:

In einem Reaktionsgefäß mit Rührer und Destillierbrücke wurden 194 g p-Hydroxybenzoesäure, 48,6 g Hydrochinon, 40,7 g 4,4'-Dihydroxybiphenyl, 17,1 g Terephthalsäure, 0,55 g Zink(II)acetat und 487,6 g Diphenylcarbonat auf 250° C erhitzt.

Nach Erhöhung der Temperatur auf 295° C und nachlassender Destillationsgeschwindigkeit wurde bei dieser Temperatur langsam innerhalb 1 Stunde ein Vakuum von 0,5 x $10^{3}$ bar angelegt und 1 Stunde nachkondensiert.

Formmassenherstellung:

Aus 50 g ungesättigtem Polyesterharz, 1 g Aminbeschleuniger aus Dipropoxy-p-toluidin und Adipinsäure, 1,15 g Benzoylperoxid-Paste (50 %ig) und 63,5 g thermotropem Polyester oder Füllstoff wurden Formmassen hergestellt, deren Eigenschaften in Tabelle 1 zusammengestellt sind.

**Tabelle 1 Formmassen-Eigenschaften**

| Formmasse | UP-Harz | Thermotropes Polymer; Füllstoff | Fließfähigkeit vor der Härtung | Farbe nach der Härtung | Oberfläche |
|---|---|---|---|---|---|
| I | UP 1 | thermotroper Polyester | gießbar | hellbeige | trocken |
| II | UP 2 | " | " | " | " |
| III | UP 3 | " | " | " | " |
| IV | UP 4 | " | " | " | " |
| V | UP 1 | Talkpulver | nicht gießbar | grün | klebrig |
| VI | UP 2 | " | " | " | klebrig |
| VII | UP 3 | " | " | " | trocken |
| VIII | UP 4 | " | " | " | klebrig |
| IX | UP 2 | Kreide | " | gelblich | klebrig |
| X | UP 4 | " | " | " | klebrig |

Versuche I bis IV sind erfindungsgemäße Versuche, V bis X stellen Vergleichsversuche dar.

Die Eigenschaften der erfindungsgemäßen Formmassen unterscheiden sich deutlich von denen der Vergleichsversuche.

Formmassen IX und X härten nach Zugabe von Benzoylperoxid spontan aus, so daß die Gießfähigkeit nicht beurteilt werden kann. Vor der Peroxid-Zugabe sind beide Formmassen noch gießbar.

## Ansprüche

1. Mischungen aus
I) 10 bis 90 Gew.-% ungesättigtem Polyesterharz und
II) 90 bis 10 Gew.-% thermotropem Polymer,
wobei sich die Prozentangaben jeweils auf die Summe I + II beziehen.

2. Mischungen nach Anspruch 1 aus
I) 30 bis 70 Gew.-% ungesättigtem Polyesterharz und
II) 70 bis 30 Gew.-% thermotropem Polymer.

3. Mischungen nach Ansprüchen 1 und 2, wobei das Polyesterharz I aus
A) 30 bis 95 Gew.-Teilen ungesättigtem Polyester und
B) 70 bis 5 Gew.-Teilen mit A copolymerisierbarem Monomer besteht.

4. Mischungen nach Ansprüchen 1 und 2, wobei das Polyesterharz I aus
A) 50 bis 90 Gew.-Teilen Polyester und
B) 50 bis 10 Gew.-Teilen Monomer besteht.

5. Mischungen nach Ansprüchen 1 bis 4, wobei das thermotrope Polymer II ein voll-aromatischer Polyester oder ein voll-aromatisches Polyestercarbonat ist.

6. Verfahren zur Herstellung der Mischungen nach Ansprüchen 1 bis 5 durch Vereinigen der Komponenten.

7. Verwendung der Mischungen nach Ansprüchen 1 bis 5 zur Herstellung von Formkörpern.